(19) Europäisches Patentamt
European Patent Office
Office européen des brevets

(11) **EP 4 557 426 A1**

(12) **EUROPEAN PATENT APPLICATION**

(43) Date of publication:
**21.05.2025 Bulletin 2025/21**

(21) Application number: **24212947.6**

(22) Date of filing: **14.11.2024**

(51) International Patent Classification (IPC):
***H01M 10/0525*** *(2010.01)* ***H01M 10/0567*** *(2010.01)*

(52) Cooperative Patent Classification (CPC):
**H01M 10/0567; H01M 10/0525; H01M 10/4235;**
H01M 2300/0025

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.11.2023 KR 20230157630**

(71) Applicant: **SAMSUNG SDI CO., LTD.**
**Yongin-si, Gyeonggi-do 17084 (KR)**

(72) Inventors:
- **Lee, Tae Jin**
  **17084 Yongin-si, Gyeonggi-do (KR)**
- **Kim, Minseo**
  **17084 Yongin-si, Gyeonggi-do (KR)**
- **Kim, Dahyun**
  **17084 Yongin-si, Gyeonggi-do (KR)**
- **Woo, Myungheui**
  **17084 Yongin-si, Gyeonggi-do (KR)**

(74) Representative: **Gulde & Partner**
**Patent- und Rechtsanwaltskanzlei mbB**
**Berliner Freiheit 2**
**10785 Berlin (DE)**

# (54) ELECTROLYTE SOLUTION FOR RECHARGEABLE LITHIUM BATTERY AND RECHARGEABLE LITHIUM BATTERY INCLUDING THE SAME

(57) The electrolyte solution for a rechargeable lithium battery according to some example embodiments includes a non-aqueous organic solvent, a lithium salt; and an additive. The additive includes a first compound represented by Chemical Formula 1 and a second compound represented by Chemical Formula 2.

EP 4 557 426 A1

## Description

## BACKGROUND

### 1. Field

An electrolyte solution for a rechargeable lithium battery and a rechargeable lithium battery including the same are disclosed.

### 2. Description of the Related Art

With increasing use of electronic devices that use batteries, such as, e.g., mobile phones, laptop computers, electric vehicles, and the like, the demand for rechargeable batteries with high energy density and high capacity is increasing.

Rechargeable lithium batteries typically include a positive electrode and a negative electrode including an active material capable of intercalating and deintercalating lithium ions, and an electrolyte solution, and generate electrical energy through oxidation and reduction reactions when lithium ions are intercalated and deintercalated from the positive electrode and the negative electrode.

There is increased interest in rechargeable lithium batteries with high capacity, high energy density, and high safety for use as a driving power source for hybrid vehicles or electric vehicles, or as a power storage power source.

In rechargeable lithium batteries, the electrolyte solution plays a role in transferring lithium ions, and can exhibit significantly higher ionic conductivity by including organic solvents and lithium salts. These electrolyte solutions play a role in determining the safety and performance of rechargeable lithium batteries.

When rechargeable lithium batteries are exposed to overcharge, the cell may explode, raising safety concerns about the battery. When exposed to high temperatures, an increase in the battery's internal resistance may present a challenge.

Accordingly, development of an electrolyte solution to realize a battery with desired or improved safety even under overcharge and exposure to high temperatures may be advantageous.

## SUMMARY

The invention is defined by the appended claims. The description that follows is subjected to this limitation. Any disclosure lying outside the scope of said claims is only intended for illustrative as well as comparative purposes.

Some example embodiments include an electrolyte solution for a rechargeable lithium battery having desired or improved safety under overcharge and desired or improved high-temperature storage characteristics.

Some example embodiments include a rechargeable lithium battery including the electrolyte solution.

In some example embodiments, an electrolyte solution for a rechargeable lithium battery includes a non-aqueous organic solvent, a lithium salt, and an additive, wherein the additive includes a first compound represented by Chemical Formula 1, and a second compound represented by Chemical Formula 2.

Chemical Formula 1:

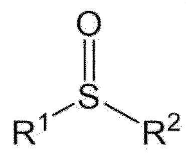

Chemical Formula 2:

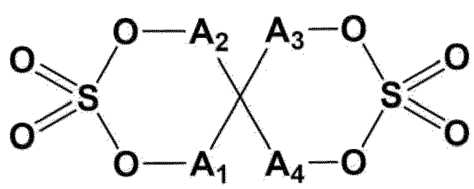

In Chemical Formula 1, $R^1$ and $R^2$ are each independently selected from a substituted or unsubstituted C1 to C20 alkyl group, and a substituted or unsubstituted C6 to C30 aryl group, provided that at least one of $R^1$ and $R^2$ is a substituted or unsubstituted C6 to C30 aryl group, wherein the term "substituted" refers to replacement of at least one hydrogen of a substituent by deuterium, a halogen, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, a and cyano group;
in Chemical Formula 2, $A_1$, $A_2$, $A_3$, and $A_4$ each independently are selected from a single bond, a C1 to C5 alkylene group unsubstituted or substituted with a substituent, a carbonyl group, and a sulfinyl group, provided that $A_1$ and $A_2$ are not simultaneously or contemporaneously single bonds, and $A_3$ and $A_4$ are not simultaneously or contemporaneously single bonds, wherein the substituent of the C1 to C20 alkyl group is selected from a halogen, a C2 to C20 alkenyl group substituted or unsubstituted with a halogen, a C2 to C20 alkynyl group substituted or unsubstituted with a halogen, a C3 to C20 cycloalkenyl group substituted or unsubstituted with a halogen, a C3 to C20 heterocyclyl group substituted or unsubstituted with a halogen, a C6 to C40 aryl group substituted or unsubstituted with a halogen, and a C2 to C40 heteroaryl group substituted or unsubstituted with a halogen.

In some example embodiments, a rechargeable lithium battery includes a positive electrode including a positive electrode active material, a negative electrode including a negative electrode active material, a separator between the positive electrode and the negative electrode, and the aforementioned electrolyte solution.

An electrolyte solution for a rechargeable lithium battery according to some example embodiments may result in the rechargeable lithium battery having desired or improved safety under overcharge and desired or improved high-temperature storage characteristics.

## BRIEF DESCRIPTION OF THE DRAWINGS

FIGS. 1 to 4 are schematic cross-sectional views of a rechargeable lithium battery, according to some example embodiments.
FIG. 5 is a graph showing the results of evaluating overcharge of the rechargeable lithium battery cells manufactured in Example 1, and Comparative Examples 1 to 3.
FIG. 6 is a graph showing the results of evaluating high-temperature storage characteristics of rechargeable lithium battery cells manufactured in Example 1 and Comparative Examples 1 to 3.

## DETAILED DESCRIPTION

Hereinafter, example embodiments of the present disclosure will be described in detail. However, these embodiments are presented as examples, the present disclosure is not limited thereto, and the present disclosure is defined by the scope of the claims described below.

As used herein, when specific definition is not otherwise provided, it will be understood that when an element such as a layer, film, region, or substrate is referred to as being "on" another element, the element can be directly on the other element or intervening elements may also be present.

Unless otherwise specified in this specification, what is indicated in the singular may also include the plural.

As used herein, "combination thereof" means a mixture, laminate, composite, copolymer, alloy, blend, reaction product, and the like of the constituents.

As used herein, when a definition is not otherwise provided, a particle diameter may be an average particle diameter. In addition, the particle diameter means the average particle diameter (D50), which means the diameter of particles having a cumulative volume of 50 volume% in the particle size distribution. The average particle size (D50) may be measured by a method well known to those skilled in the art, for example, by a particle size analyzer, or by a transmission electron microscope image, or a scanning electron microscope image. Alternatively, a dynamic light-scattering measurement device is used to perform a data analysis, and the number of particles is counted for each particle size range. From this, the average particle diameter (D50) value may be readily obtained through a calculation. Alternatively, the average particle diameter (D50) value can be measured using a laser diffraction method. When measuring by the laser diffraction method, more specifically, the particles to be measured are dispersed in a dispersion medium, and then introduced into a commercially available laser diffraction particle diameter measuring device (e.g., Microtrac MT 3000), and ultrasonic waves of about 28 kHz with an output of 60 W are irradiated to calculate an average particle diameter (D50) on the basis of 50% of the particle diameter distribution in the measuring device.

As used herein, when a definition is not otherwise provided, "substituted" refers to replacement of at least one hydrogen of a substituent or a compound by deuterium, a halogen, a hydroxyl group, an amino group, a C1 to C30 amine

group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, a and cyano group.

For example, "substituted" may refer to replacement of at least one hydrogen of a substituent or a compound by deuterium, a halogen, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. For example, "substituted" may refer to replacement of at least one hydrogen of a substituent or a compound by deuterium, a halogen, a C1 to C20 alkyl group, a C6 to C30 aryl group, a C1 to C10 fluoroalkyl group, or a cyano group. Alternatively, "substituted" may refer to replacement of at least one hydrogen of a substituent or a compound by deuterium, a halogen group, a C1 to C5 alkyl group, a C6 to C18 aryl group, a C1 to C5 fluoroalkyl group, or a cyano group. For example, "substituted" may refer to replacement of at least one hydrogen of a substituent or a compound by deuterium, a cyano group, a halogen, a methyl group, an ethyl group, a propyl group, a butyl group, a phenyl group, a biphenyl group, a terphenyl group, a trifluoromethyl group, or a naphthyl group.

An electrolyte solution for a rechargeable lithium battery according to some example embodiments includes a non-aqueous organic solvent, a lithium salt, and an additive, wherein the additive includes a first compound, and a second compound. The first and second compounds are described in detail below.

In an example embodiment, when the first compound and the second compound are used in combination, a rechargeable lithium battery having desired or improved safety under overcharge and desired or improved high-temperature storage characteristics can be achieved.

## First Compound

The first compound is a sulfoxide-based compound, which effectively reduces or suppresses the heating temperature of the battery under overcharge operating conditions.

The first compound is represented by Chemical Formula 1.

Chemical Formula 1:

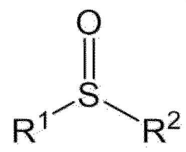

In Chemical Formula 1, $R^1$ and $R^2$ each independently are selected from a substituted or unsubstituted C1 to C20 alkyl group, and a substituted or unsubstituted C6 to C30 aryl group, provided that at least one of $R^1$ and $R^2$ is a substituted or unsubstituted C6 to C30 aryl group.

In some example embodiments, Chemical Formula 1 may be represented by Chemical Formula 1-1 or Chemical Formula 1-2.

Chemical Formula 1-1:

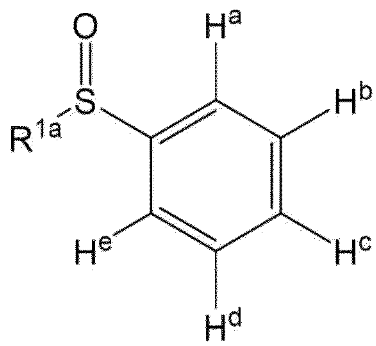

In Chemical Formula 1-1,

$R^{1a}$ is a substituted or unsubstituted C1 to C20 alkyl group, and

$H^a$ to $H^e$ are each independently selected from hydrogen, a halogen, a hydroxyl group, a cyano group, a nitro group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, and a substituted or unsubstituted C2 to C20 heteroaryl group.

As an example, $H^a$ to $H^e$ may each independently be selected from hydrogen, a halogen group, a substituted or unsubstituted C1 to C20 alkyl group, and a substituted or unsubstituted C1 to C20 alkoxy group.

Chemical Formula 1-2:

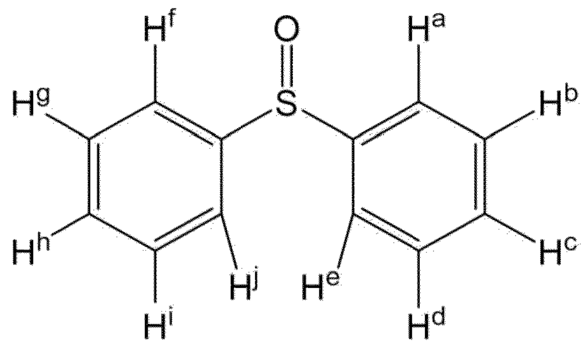

In Chemical Formula 1-2,
$H^a$ to $H^j$ are each independently selected from hydrogen, a halogen, a hydroxyl group, a cyano group, a nitro group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, and a substituted or unsubstituted C2 to C20 heteroaryl group.

As a specific example, $H^a$ to $H^j$ may each independently be selected from hydrogen, a halogen group, a substituted or unsubstituted C1 to C20 alkyl group, and a substituted or unsubstituted C1 to C20 alkoxy group.

As an example, the first compound may be one of the compounds listed in Group 1.

Group 1:

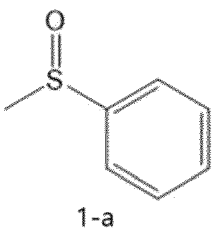

1-a

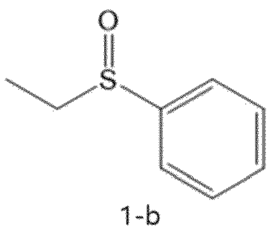

1-b

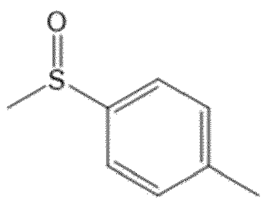

1-c

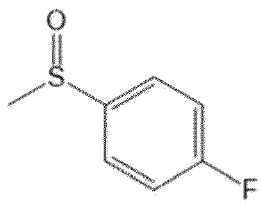

1-d

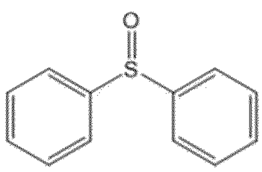

1-e

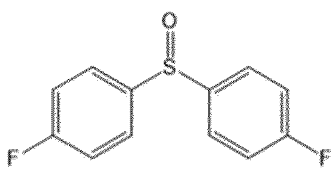

1-f

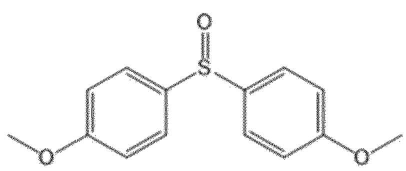

1-g

In some example embodiments, the first compound may be included in an amount greater than 0.05 wt%, or greater than or equal to 0.1 wt%, and less than 6 wt%, or less than or equal to 5 wt%, based on a total weight of the electrolyte solution for a rechargeable lithium battery.

As a specific example, the first compound may be included in an amount greater than 0.05 wt% and less than 6

wt%, for example, greater than 0.05 wt% and less than or equal to 5 wt%, greater than or equal to 0.1 wt% and less than 6 wt%, or 0.1 wt% to 5 wt%.

When the first compound is included in an amount less than or equal to 0.05 wt% based on a total weight of the electrolyte solution for a rechargeable lithium battery, improving battery safety during overcharging is minimal, and when the first compound is included in an amount greater than or equal to about 6 wt%, the resistance of the battery may excessively increase, thereby shortening the cycle-life of the battery.

**Second Compound**

The second compound is or includes a bicyclic sulfate compound, which forms a solid electrolyte interface (SEI) layer on the surface of the negative electrode or a protective layer on the surface of the positive electrode, thereby improving the thermal stability of the battery, and thus enhancing the cycle-life characteristics of the rechargeable lithium battery at high temperatures.

The second compound is represented by Chemical Formula 2.

Chemical Formula 2:

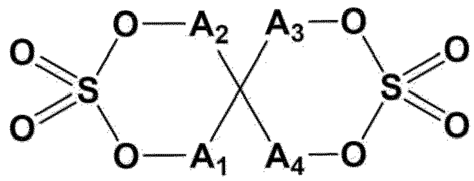

In Chemical Formula 2, $A_1$, $A_2$, $A_3$, and $A_4$ are each independently selected from a single bond; a C1 to C5 alkylene group unsubstituted or substituted with a substituent, a carbonyl group, and a sulfinyl group, provided that $A_1$ and $A_2$ are not simultaneously or contemporaneously single bonds and As and $A_4$ are not simultaneously or contemporaneously single bonds.

For example, at least one of the above $A_1$, $A_2$, $A_3$, and $A_4$ may be an unsubstituted C1 to C5 alkylene group or a substituted C1 to C5 alkylene group, and the substituent of the substituted C1 to C5 alkylene group may be at least one of a C1 to C20 alkyl group substituted or unsubstituted with a halogen, a C2 to C20 alkenyl group substituted or unsubstituted with a halogen, a C2 to C20 alkynyl group substituted or unsubstituted with a halogen, a C3 to C20 cycloalkenyl group substituted or unsubstituted with a halogen, a C3 to C20 heterocyclyl group substituted or unsubstituted with a halogen, a C6 to C40 aryl group substituted or unsubstituted with a halogen, or a C2 to C40 heteroaryl group substituted or unsubstituted with a halogen.

For example, at least one of $A_1$, $A_2$, $A_3$, and $A_4$ may be at least one of an unsubstituted C1 to C5 alkylene group or a substituted C1 to C5 alkylene group, and the substituent of the substituted C1 to C5 alkylene group may be or include at least one of a halogen, a methyl group, an ethyl group, a propyl group, an isopropyl group, a butyl group, a tert-butyl group, a trifluoromethyl group, a tetrafluoroethyl group, a phenyl group, a naphthyl group, a tetrafluorophenyl group, a pyrrolyl group, or a pyridinyl group.

In some example embodiments, Chemical Formula 2 may be one or of the compounds represented by Chemical Formula 2-1 to Chemical Formula 2-7.

Chemical Formula 2-1:

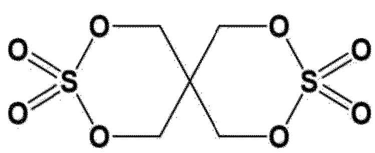

Chemical Formula 2-2:

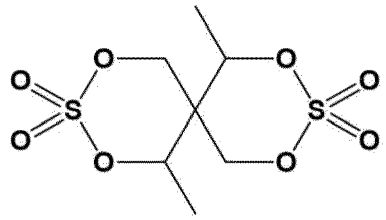

Chemical Formula 2-3:

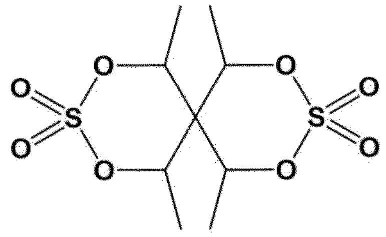

Chemical Formula 2-4:

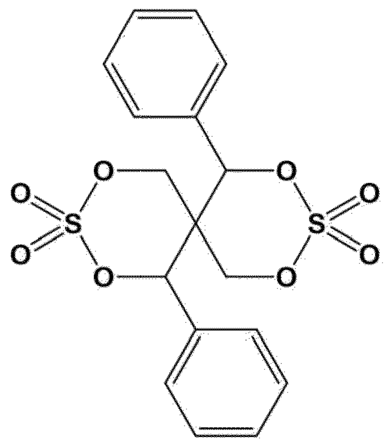

Chemical Formula 2-5:

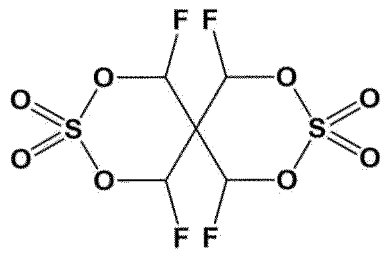

Chemical Formula 2-6:

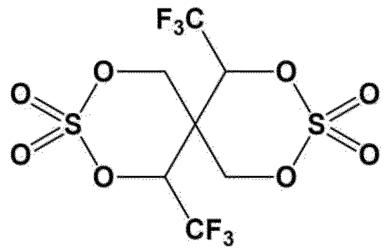

Chemical Formula 2-7:

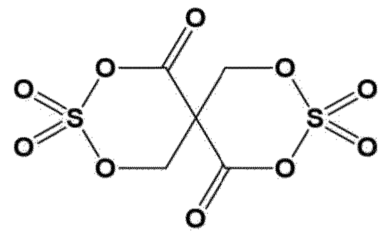

In some example embodiments, the second compound may be included in an amount greater than 0.05 wt%, greater than or equal to 0.1 wt%, and less than 6 wt%, or less than or equal to 5 wt%, based on a total weight of the electrolyte solution for a rechargeable lithium battery.

As an example, the second compound may be included in an amount greater than 0.05 wt% and less than 6 wt%, for example greater than 0.05 wt% and less than or equal to 5 wt%, greater than or equal to 0.1 wt% and less than 6 wt%, or 0.1 wt% to 5 wt% based on a total weight of the electrolyte solution for a rechargeable lithium battery.

When the second compound is included in an amount that is less than or equal to 0.05 wt% based on the total weight of the electrolyte solution for a rechargeable lithium battery, it may be challenging to improve the high-temperature cycle-life characteristics of the battery, and when the second compound is included in an amount that is greater than or equal to about6 wt%, the resistance of the battery may excessively increase, thereby reducing the cycle-life of the battery.

In some example embodiments, the first compound and the second compound may be included in a weight ratio of 0.01:1 to 100:1, for example, a weight ratio of 0.05:1 to 100:1, a weight ratio of 0.01:1 to 40:1, a weight ratio of 0.05:1 to 40:1, a weight ratio of 0.05:1 to 20:1, or a weight ratio of 0.1:1 to 20:1.

When the weight ratio of the first compound to the second compound satisfies any one of the above numerical ranges, a battery having desired or improved stability under overcharge and desired or improved high-temperature cycle-life characteristics can be obtained.

The electrolyte solution for a rechargeable lithium battery includes a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethylacetate, methylpropionate, ethylpropionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like and the aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone or in combination of two or more solvents.

In examples, when using a carbonate-based solvent, a cyclic carbonate and a chain carbonate may be mixed and

used, and the cyclic carbonate and the chain carbonate may be mixed in a volume ratio of about 1:1 to about 1:9.

The lithium salt dissolved in the organic solvent may supply lithium ions in a battery, may enable a basic operation of a rechargeable lithium battery, and may improve transportation of the lithium ions between positive and negative electrodes. For example, the lithium salt may include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$, x and y are integers of 1 to 20, lithium trifluoromethane sulfonate, lithium tetrafluoroethanesulfonate, lithium difluorobis(oxalato)phosphate (LiDFOB), and lithium bis(oxalato) borate (LiBOB).

A rechargeable lithium battery according to some example embodiments includes a positive electrode including a positive electrode active material, a negative electrode including a negative electrode active material, a separator between the positive electrode and the negative electrode, and the aforementioned electrolyte solution.

## Positive Electrode Active Material

The positive electrode active material may include a compound (lithiated intercalation compound) capable of intercalating and deintercalating lithium. For example, at least one of a composite oxide of lithium, and a metal including at least one of cobalt, manganese, nickel, and combinations thereof may be used.

The composite oxide may be or include a lithium transition metal composite oxide, and specific examples thereof may include at least one of lithium nickel-based oxide, lithium cobalt-based oxide, lithium manganese-based oxide, lithium iron phosphate-based compound, cobalt-free lithium nickel-manganese-based oxide, or a combination thereof.

As an example, any one or more of the following compounds represented by any one of the following chemical formulas may be used. $Li_aA_{1-b}X_bO_{2-c}D_c$ ($0.90 \leq a \leq 1.8$, $0 \leq b \leq 0.5$, and $0 \leq c \leq 0.05$); $Li_aMn_{2-b}X_bO_{4-c}D_c$ ($0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_{1-b-c}Mn_bX_cO_{2-\alpha}O_\alpha$ ($0.90 \leq a \leq 1.8$, $0 \leq b \leq 0.5$, $0 \leq c \leq 0.5$, and $0 < \alpha < 2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ ($0.90 \leq a \leq 1.8$ and $0.001 \leq b \leq 0.1$); $Li_aCoG_bO_2$ ($0.90 \leq a \leq 1.8$ and $0.001 \leq b \leq 0.1$); $Li_aMn_{1-b}G_bO_2$ ($0.90 \leq a \leq 1.8$ and $0.001 \leq b \leq 0.1$); $Li_aMn_2G_bO_4$ ($0.90 \leq a \leq 1.8$ and $0.001 \leq b \leq 0.1$); $Li_aMn_{1-g}G_gPO_4$ ($0.90 \leq a \leq 1.8$, $0 \leq g \leq 0.5$); $Li_{(3-f)}Fe_2(PO_4)_3$ ($0 \leq f \leq 2$); or $Li_aFePO_4$ ($0.90 \leq a \leq 1.8$).

In the above chemical formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and $L^1$ is or includes at least one of Mn, Al, or a combination thereof.

For example, the positive electrode active material may be or include a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material can realize high capacity, and can be applied to a high-capacity, high-density rechargeable lithium battery.

## Positive Electrode

A positive electrode for a rechargeable lithium battery may include a current collector, and a positive electrode active material layer on the current collector. The positive electrode active material layer may include a positive electrode active material, and may further include a binder and/or a conductive material.

For example, the positive electrode may further include an additive that can constitute a sacrificial positive electrode.

An amount of the positive electrode active material may be about 90 wt% to about 99.5 wt% based on 100% by weight of the positive electrode active material layer, and amounts of the binder and the conductive material may be about 0.5 wt% to about 5 wt%, respectively, based on 100 wt% of the positive electrode active material layer.

The binder is configured to attach the positive electrode active material particles to each other and also to attach the positive electrode active material to the current collector. Examples of the binder may include or at least one of polyvinyl alcohol, carboxymethylcellulose, hydroxypropylcellulose, diacetylcellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, but are not limited thereto.

The conductive material is configured to impart conductivity to the electrode, and any material that does not cause chemical change and conducts electrons can be used in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material containing at least one of copper, nickel, aluminum, silver, etc., in a form of a metal powder or a metal fiber; a conductive polymer such as a

polyphenylene derivative; or a mixture thereof.

Al may be included in the current collector, but is not limited thereto.

## Negative Electrode Active Material

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, for example crystalline carbon, amorphous carbon or a combination thereof. The crystalline carbon may be or include graphite such as non-shaped, sheet-shaped, flake-shaped, sphere-shaped, or fiber-shaped natural graphite or artificial graphite, and the amorphous carbon may be or include at least one of a soft carbon, a hard carbon, a mesophase pitch carbonization product, calcined coke, and the like.

The lithium metal alloy includes an alloy of lithium and a metal including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include at least one of a Si-based negative electrode active material or a Sn-based negative electrode active material. The Si-based negative electrode active material may include at least one of silicon, a silicon-carbon composite, SiOx ($0 < x < 2$), a Si-Q alloy (wherein Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO_2$, a Sn-based alloy, or a combination thereof.

The silicon-carbon composite may be or include at least one of a composite of silicon and amorphous carbon. According to an example embodiment, the silicon-carbon composite may be in the form of, or may include, silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material, or the Sn-based negative electrode active material, may be used in combination with a carbon-based negative electrode active material.

## Negative Electrode

The negative electrode for a rechargeable lithium battery includes a current collector, and a negative electrode active material layer on the current collector. The negative electrode active material layer may include a negative electrode active material, and may further include a binder and/or a conductive material.

For example, the negative electrode active material layer may include about 90 wt% to about 99 wt% of the negative electrode active material, about 0.5 wt% to about 5 wt% of the binder, and about 0 wt% to about 5 wt% of the conductive material.

The binder is configured to attach the negative electrode active material particles to each other, and also to attach the negative electrode active material to the current collector. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is used as the negative electrode binder, a cellulose-based compound configured to impart viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material capable of being fibrous, and may be or include, for example, at least one of polytetrafluoroethylene, polyvinylidene fluoride, a polyvinylidene fluoride-hexafluoropropylene copolymer,

polyethylene oxide, or a combination thereof.

The conductive material is configured to impart conductivity to the electrode, and any material that does not cause chemical change, and that conducts electrons can be used in the battery. Examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, etc. in a form of a metal powder or a metal fiber; a conductive polymer such as a polyphenylene derivative; or a mixture thereof.

The negative electrode current collector may include at least one of a copper foil, a nickel foil, a stainless steel foil, a titanium foil, a nickel foam, a copper foam, a polymer substrate coated with a conductive metal, and a combination thereof.

**Separator**

Depending on the type of rechargeable lithium battery, a separator may be present between the positive electrode and the negative electrode. The separator may include at least one of polyethylene, polypropylene, polyvinylidene fluoride, or a multilayer film of two or more layers thereof, and a mixed multilayer film such as a at least one of polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof, on one or both surfaces of the porous substrate.

The porous substrate may be or include a polymer film formed of or including at least one of a polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles including at least one of $Al_2O_3$, $SiO_2$, $TiO_2$, $SnO_2$, $CeO_2$, MgO, NiO, CaO, GaO, ZnO, $ZrO_2$, $Y_2O_3$, SrTiOs, BaTiOs, $Mg(OH)_2$, boehmite, and a combination thereof, but is not limited thereto.

The organic material and the inorganic material may be mixed in one coating layer, or a coating layer including an organic material and a coating layer including an inorganic material may be stacked.

**Rechargeable Lithium Battery**

The rechargeable lithium battery may be classified into cylindrical, prismatic, pouch, coin, and the like depending on their shape. FIGS. 1 to 4 are schematic views illustrating a rechargeable lithium battery, according to some example embodiments. FIG. 1 illustrates a cylindrical battery, FIG. 2 illustrates a prismatic battery, and FIGS. 3 and 4 illustrate pouch-type batteries. Referring to FIGS. 1 to 4, the rechargeable lithium battery 100 includes an electrode assembly 40 including a separator 30 between a positive electrode 10 and a negative electrode 20, and a case in which the electrode assembly 40 is included. The positive electrode 10, the negative electrode 20, and the separator 30 may be impregnated with an electrolyte solution (not shown). The rechargeable lithium battery 100 may include a sealing member 60 that seals the case 50, as shown in FIG. 1. Additionally, in FIG. 2, the rechargeable lithium battery 100 may include a positive electrode lead tab 11, a positive electrode terminal 12, a negative lead tab 21, and a negative electrode terminal 22. As shown in FIGS. 3 and 4, the rechargeable lithium battery 100 includes an electrode tab 70 as illustrated in FIG. 4, and may include a positive electrode tab 71 and a negative electrode tab 72 as illustrated in FIG. 3, the electrode tabs 70/71/72 forming an electrical path for inducing the current formed in the electrode assembly 40 to the outside of the battery 100.

The rechargeable lithium battery according to an example embodiment may be applicable to, e.g., automobiles, mobile phones, and/or various types of electric devices, but the present disclosure is not limited thereto.

Examples and comparative examples of the present disclosure are described below. However, the following examples are only examples of the present disclosure, and the present disclosure is not limited to the following examples.

**Examples:**

Example 1

1.15 M $LiPF_6$ lithium salt is dissolved in a non-aqueous organic solvent mixed with ethylene carbonate (EC), methyl ethyl carbonate (MEC), and diethyl carbonate (DEC) in a volume ratio of 20:40:40 to prepare a basic electrolyte

solution.

An electrolyte solution is prepared by adding Compound 1-a as a first compound and a compound represented by Chemical Formula 2-1 as a second compound to the above basic electrolyte solution.

Compound 1-a:

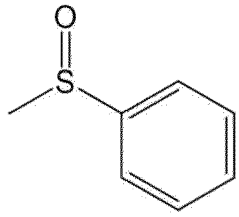

Chemical Formula 2-1:

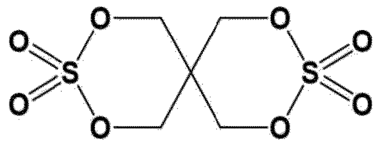

Herein, 2 wt% of the first compound and 1 wt% of the second compound are added based on a total amount of the electrolyte solution.

$LiNi_{0.91}Co_{0.07}Al_{0.02}O_2$ as a positive electrode active material, polyvinylidene fluoride as a binder, and ketjen black as a conductive material are mixed in a weight ratio of 97:2:1 and then, dispersed in N-methyl pyrrolidone, preparing positive electrode active material slurry.

The positive electrode active material slurry is coated in a 14 μm-thick Al foil, dried at 110 °C, and compressed, manufacturing a positive electrode.

In addition, negative electrode active material slurry is prepared by mixing artificial graphite as a negative electrode active material, styrene-butadiene rubber as a binder, and carboxylmethyl cellulose as a thickener in a weight ratio of 97:1:2, and dispersing the mixture in distilled water. The negative electrode active material slurry is coated on a 10 μm-thick Cu foil current collector, dried at 100 °C, and compressed, thus manufacturing a negative electrode.

Between the positive electrode and the negative electrode, a 25 μm-thick separator with a polyethylene-polypropylene multi-layer structure is interposed to manufacture an electrode assembly, and a rechargeable lithium battery cell is manufactured by inserting the electrode assembly into a prismatic battery case, and injecting the prepared electrolyte solution thereinto.

Examples 2 to 15

Each rechargeable lithium battery cell according to Examples 2 to 15 is manufactured in the same manner as in Example 1, with a difference that the contents of the first compound and the second compound based on a total content of the electrolyte solution are changed respectively as shown in Table 1.

Comparative Example 1

A rechargeable lithium battery cell is manufactured in the same manner as in Example 1, with a difference that the first compound and the second compound are not added to the electrolyte solution.

Comparative Example 2

A rechargeable lithium battery cell is manufactured in the same manner as in Example 1, with a difference that the second compound is not added when preparing the electrolyte solution.

Comparative Example 3

A rechargeable lithium battery cell is manufactured in the same manner as in Example 1, with a difference that the

first compound is not added when preparing the electrolyte solution.

## Evaluation Examples:

### Evaluation Example 1: Evaluation of Overcharge Safety

Overcharge evaluation is performed on the rechargeable lithium battery cells manufactured in Examples 1 to 15 and Comparative Examples 1 to 3, and the results are shown in Table 1.

In addition, the results of overcharge evaluation of the rechargeable lithium battery cells manufactured in Example 1 and Comparative Examples 1 to 3 are shown in FIG. 5.

After attaching a safety protection device to a negative electrode of each of the rechargeable lithium battery cells and a tab to a positive electrode by welding, a thermocouple is attached and fixed to the center of the cells to measure a temperature.

Then, the cells prepared at a 4.2 V fully charged state are charged at a rate of 1.0 C to 6 V and exposed at that voltage for 50 minutes. When the battery cells do not ignite during the above exposure time and are in the same condition as the battery cells before evaluation, the battery cells are evaluated as 'Pass,' and when the battery cells ignite during the above exposure time, the battery cells are evaluated as 'Fail.' The results are shown in Table 1.

Referring to Table 1, in the case of Comparative Examples 1 and 3 where the first compound is not added to the electrolyte solution, the battery cells ignite when overcharged.

Referring to FIG. 5, in the case of Example 1, the temperature of the battery cell does not increase and remain constant even when exposed for 50 minutes in an overcharged state, whereas in the case of Comparative Examples 1 to 3, the temperatures of the battery cells reach about 600 °C in about 35 minutes, confirming that the battery cells ignite.

### Evaluation Example 2: Evaluation of High-temperature (60 °C) Storage Characteristics

For the rechargeable lithium battery cells according to Examples 1 to 15 and Comparative Examples 1 to 3, the initial direct current resistance (DC-IR) is measured as the $\triangle V/\triangle I$ (change in voltage/change in current) value, the maximum energy states inside the battery cells are made into a fully charged state (SOC 100), and in this state, the rechargeable lithium battery cells are stored at a high temperature (60 °C) for 90 days.

In addition, the battery cells are fully charged at room temperature (25 °C) every 30 days, the DC resistance is measured, and the DC-IR increase rate (%) is calculated according to Equation 1 below. The battery cells which DC resistance is measured are fully charged to 4.2 V, SOC 100, and stored at high temperature (60 °C).

Equation 1:

$$\text{DCIR increase rate} = (\text{DC-IR after } (30\times n) \text{ days} / \text{Initial DC-IR}) \times 100\%$$

(n is a natural number in a range from 1 to 3)

The results of the evaluation of high-temperature storage characteristics measured above are shown in Table 1 and FIG. 6.

Referring to Table 1, in the case of the rechargeable lithium battery cells of Comparative Examples 1 to 3, the resistance increase rate of the battery cells after storage at high temperatures is higher than in the Examples.

However, in the case of Comparative Example 3, due to the second compound, the high-temperature resistance increase rate is lower than the high-temperature resistance increase rates of other Comparative Examples.

Referring to FIG. 6, the rechargeable lithium battery cell of Example 1 has a significantly lower resistance increase rate after high-temperature storage than Comparative Examples 1 to 3.

Table 1

| | First compound (wt%) | Second compound (wt%) | Evaluation of Overcharge characteristics | High-temperature (60 °C) DC-IR increase rate (%) |
|---|---|---|---|---|
| Comparative Example 1 | 0 | 0 | Fail | 123.4 |
| Comparative Example 2 | 2 | 0 | Pass | 119.5 |
| Comparative Example 3 | 0 | 1 | Fail | 114.5 |

(continued)

| | First compound (wt%) | Second compound (wt%) | Evaluation of Overcharge characteristics | High-temperature (60 °C) DC-IR increase rate (%) |
|---|---|---|---|---|
| Example 1 | 2 | 1 | Pass | 110.2 |
| Example 2 | 0.05 | 1 | Fail | 115.2 |
| Example 3 | 0.1 | 1 | Pass | 114.9 |
| Example 4 | 0.5 | 1 | Pass | 114.6 |
| Example 5 | 1 | 1 | Pass | 114.3 |
| Example 6 | 3 | 1 | Pass | 114.5 |
| Example 7 | 5 | 1 | Pass | 114.2 |
| Example 8 | 6 | 1 | Pass | 114.4 |
| Example 9 | 2 | 0.05 | Pass | 123.6 |
| Example 10 | 2 | 0.1 | Pass | 118.1 |
| Example 11 | 2 | 0.5 | Pass | 114.9 |
| Example 12 | 2 | 2 | Pass | 111.1 |
| Example 13 | 2 | 3 | Pass | 109.8 |
| Example 14 | 2 | 5 | Pass | 109.4 |
| Example 15 | 2 | 6 | Pass | 108.3 |

## Evaluation Example 3: Evaluation of Room-temperature (25 °C) Cycle-life Characteristics

For the rechargeable battery cells manufactured in Examples 1 to 15, the cycle-life characteristics at room temperature (25 °C) are evaluated. Specifically, the cells are 800 cycles charged at 0.33 C and discharged at 0.5 C within a range of 2.8 V to 4.2 V to calculate capacity retention rate (%) of discharge capacity at the 800$^{th}$ cycle to discharge capacity at the 1$^{st}$ cycle, and the results are shown in Table 2.

Table 2

| | Room-temperature (25 °C) capacity retention rate (%) |
|---|---|
| Example 1 | 90.2 |
| Example 2 | 90.3 |
| Example 3 | 90.4 |
| Example 4 | 90.3 |
| Example 5 | 90.4 |
| Example 6 | 90.1 |
| Example 7 | 89.5 |
| Example 8 | 81.3 |
| Example 9 | 90.2 |
| Example 10 | 90.3 |
| Example 11 | 90.2 |
| Example 12 | 90.1 |
| Example 13 | 90.3 |
| Example 14 | 88.7 |

(continued)

| | Room-temperature (25 °C) capacity retention rate (%) |
|---|---|
| Example 15 | 79.1 |

Referring to Table 2, the rechargeable lithium battery cells manufactured in Examples 1 to 15 have desired or improved overcharge safety and high-temperature storage characteristics as described above, while the room temperature cycle-life characteristics are advantageously maintained at around 90%.

**Description of symbols**

100: rechargeable lithium battery 10: positive electrode
11: positive electrode lead tab 12: positive terminal
20: negative electrode 21: negative electrode lead tab
22: negative terminal 30: separator
40: electrode assembly 50: case
60: sealing member 70: electrode tab
71: positive electrode tab 72: negative electrode tab

## Claims

**1.** An electrolyte solution for a rechargeable lithium battery, the electrolyte solution comprising

a non-aqueous organic solvent;
a lithium salt; and
an additive,
wherein the additive comprises a first compound represented by Chemical Formula 1, and a second compound represented by Chemical Formula 2:

Chemical Formula 1:

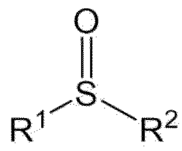

Chemical Formula 2:

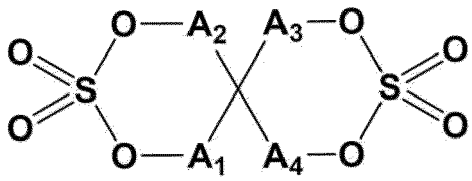

wherein, in Chemical Formula 1, $R^1$ and $R^2$ are each independently selected from a substituted or unsubstituted C1 to C20 alkyl group and a substituted or unsubstituted C6 to C30 aryl group, provided that at least one of $R^1$ and $R^2$ is a substituted or unsubstituted C6 to C30 aryl group,
wherein the term "substituted" refers to replacement of at least one hydrogen of a substituent by deuterium, a halogen, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, a and cyano group;

in Chemical Formula 2, $A_1$, $A_2$, $A_3$, and $A_4$ are each independently selected from a single bond, a C1 to C5 alkylene group unsubstituted or substituted with a substituent, a carbonyl group, and a sulfinyl group, provided that $A_1$ and $A_2$ are not simultaneously single bonds and As and $A_4$ are not simultaneously single bonds,
wherein the substituent of the C1 to C20 alkyl group is selected from a halogen, a C2 to C20 alkenyl group substituted or unsubstituted with a halogen, a C2 to C20 alkynyl group substituted or unsubstituted with a halogen, a C3 to C20 cycloalkenyl group substituted or unsubstituted with a halogen, a C3 to C20 heterocyclyl group substituted or unsubstituted with a halogen, a C6 to C40 aryl group substituted or unsubstituted with a halogen, and a C2 to C40 heteroaryl group substituted or unsubstituted with a halogen.

**2.** The electrolyte solution as claimed in claim 1, wherein
Chemical Formula 1 is represented by Chemical Formula 1-1 or Chemical Formula 1-2:

Chemical Formula 1-1:

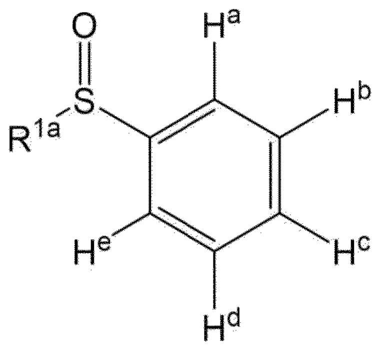

wherein, in Chemical Formula 1-1,
$R^{1a}$ is a substituted or unsubstituted C1 to C20 alkyl group, and
$H^a$ to $H^e$ are each independently selected from hydrogen, a halogen, a hydroxyl group, a cyano group, a nitro group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, and a substituted or unsubstituted C2 to C20 heteroaryl group;

Chemical Formula 1-2:

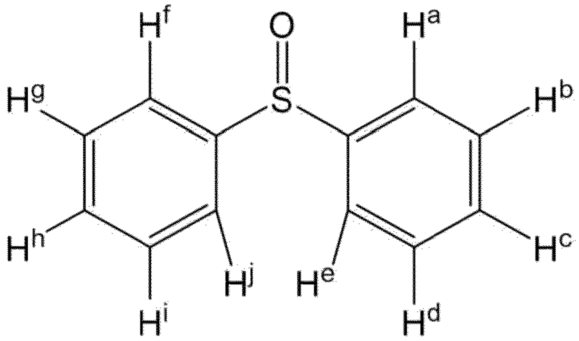

wherein, in Chemical Formula 1-2,
$H^a$ to $H^j$ are each independently selected from hydrogen, a halogen, a hydroxyl group, a cyano group, a nitro group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, and a substituted or unsubstituted C2 to C20 heteroaryl group.

**3.** The electrolyte solution as claimed in any one of the preceding claims, wherein the first compound is one of the compounds listed in Group 1:

Group 1:

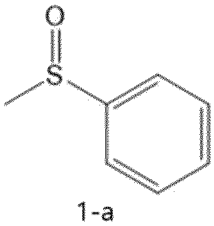

1-a

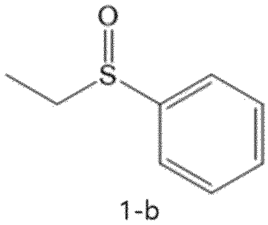

1-b

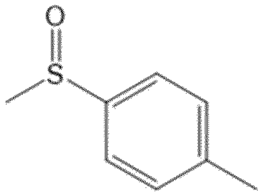

1-c

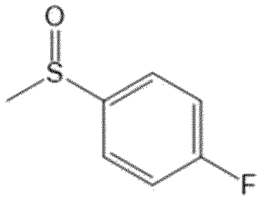

1-d

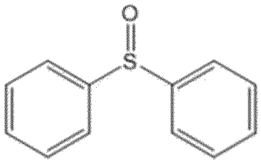

1-e

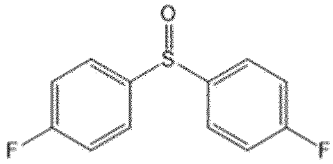

1-f

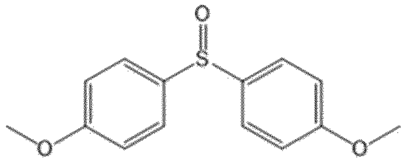

1-g

.

4. The electrolyte solution as claimed in any one of the preceding claims, wherein the second compound represented by Chemical Formula 2 is one of the compounds represented by Chemical Formula 2-1 to Chemical Formula 2-7:

Chemical Formula 2-1:

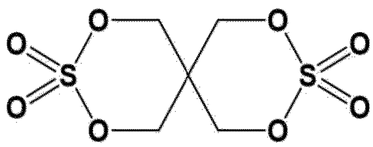

Chemical Formula 2-2:

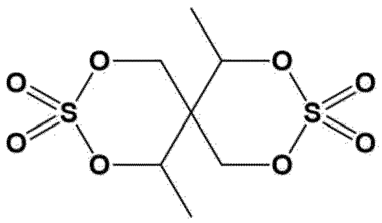

Chemical Formula 2-3:

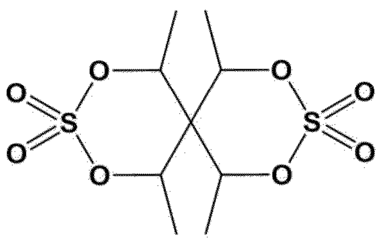

Chemical Formula 2-4:

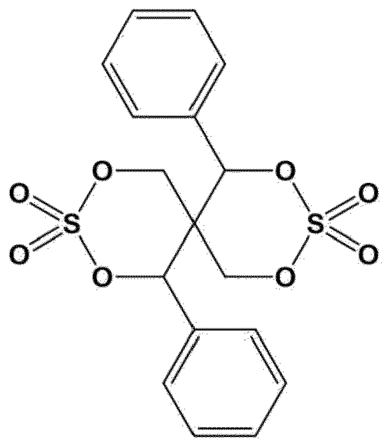

Chemical Formula 2-5:

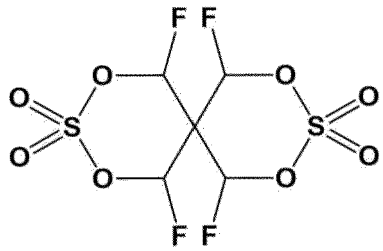

Chemical Formula 2-6:

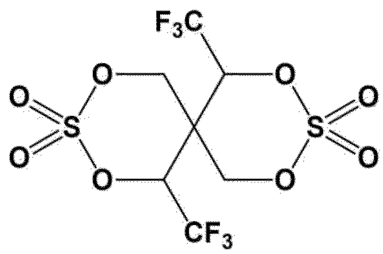

Chemical Formula 2-7:

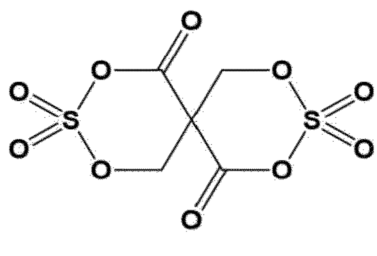

.

5. The electrolyte solution as claimed in any one of the preceding claims, wherein the first compound is included in an amount greater than 0.05 wt% and less than 6 wt% based on a total weight of the electrolyte solution.

6. The electrolyte solution as claimed in any one of the preceding claims, wherein the second compound is included in an amount greater than 0.05 wt% and less than 6 wt% based on a total weight of the electrolyte solution.

**7.** The electrolyte solution as claimed in any one of the preceding claims, wherein the first compound and the second compound are included in a weight ratio of 0.01:1 to 100:1.

**8.** A rechargeable lithium battery (100) comprising:

a positive electrode (10) including a positive electrode active material;
a negative electrode (20) including a negative electrode active material;
a separator between the positive electrode (10) and the negative electrode (20); and
the electrolyte solution as claimed in any one of the preceding claims.

FIG. 1

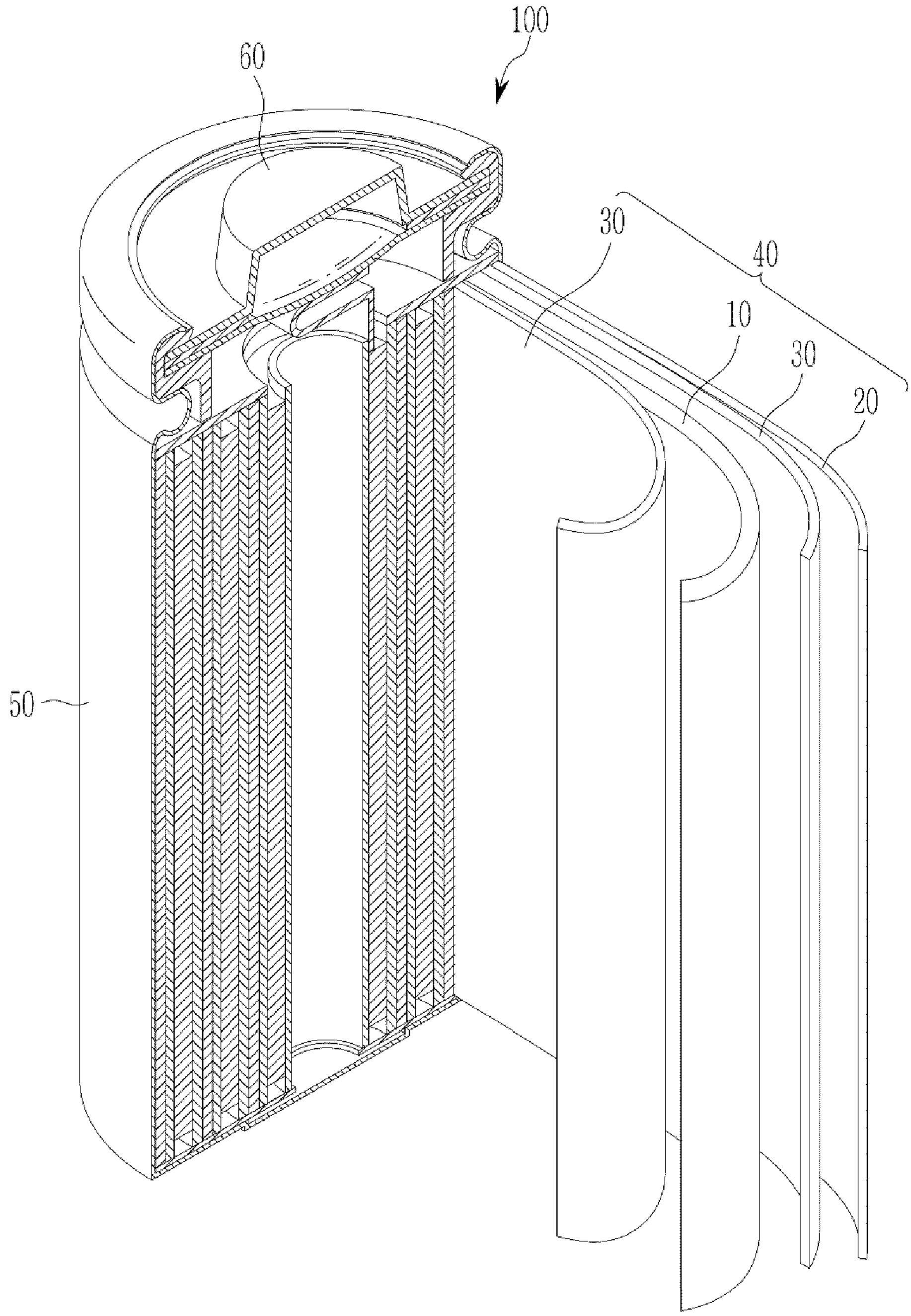

FIG. 2

100

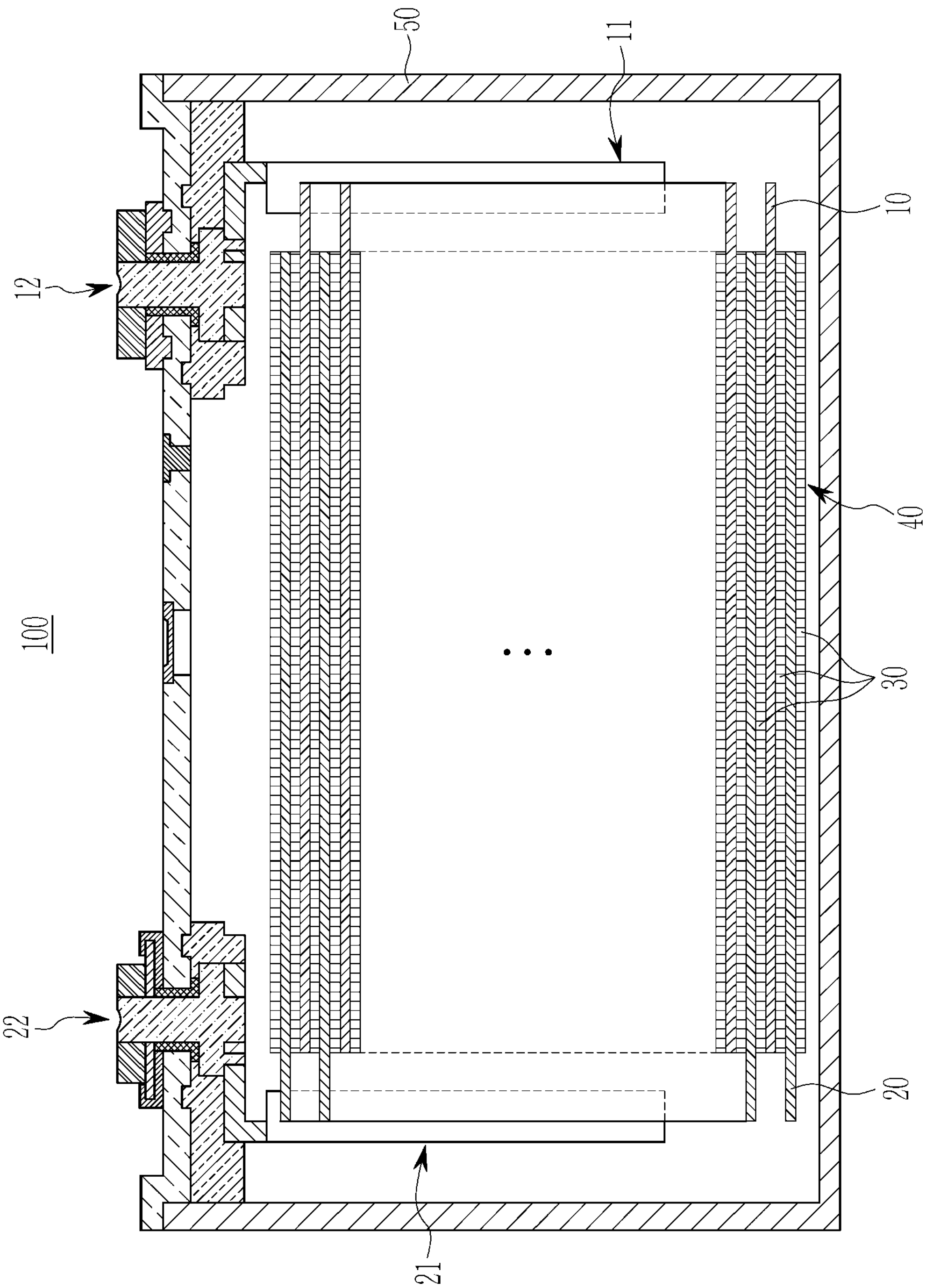

FIG. 3

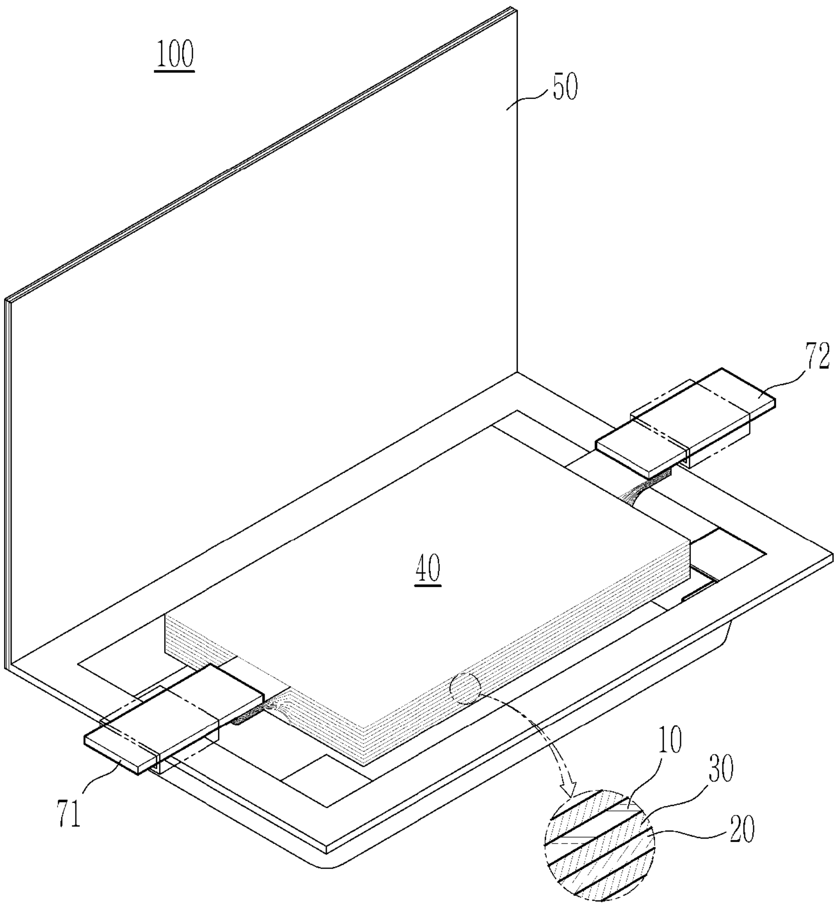

FIG. 4

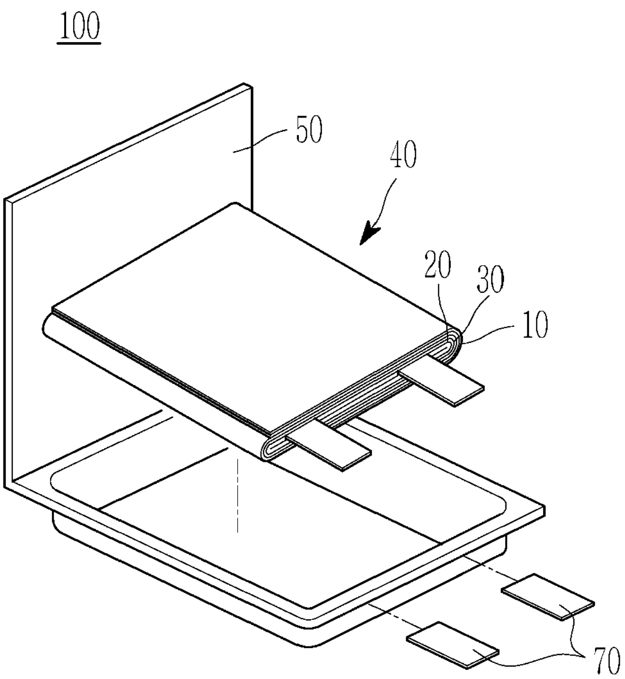

FIG. 5

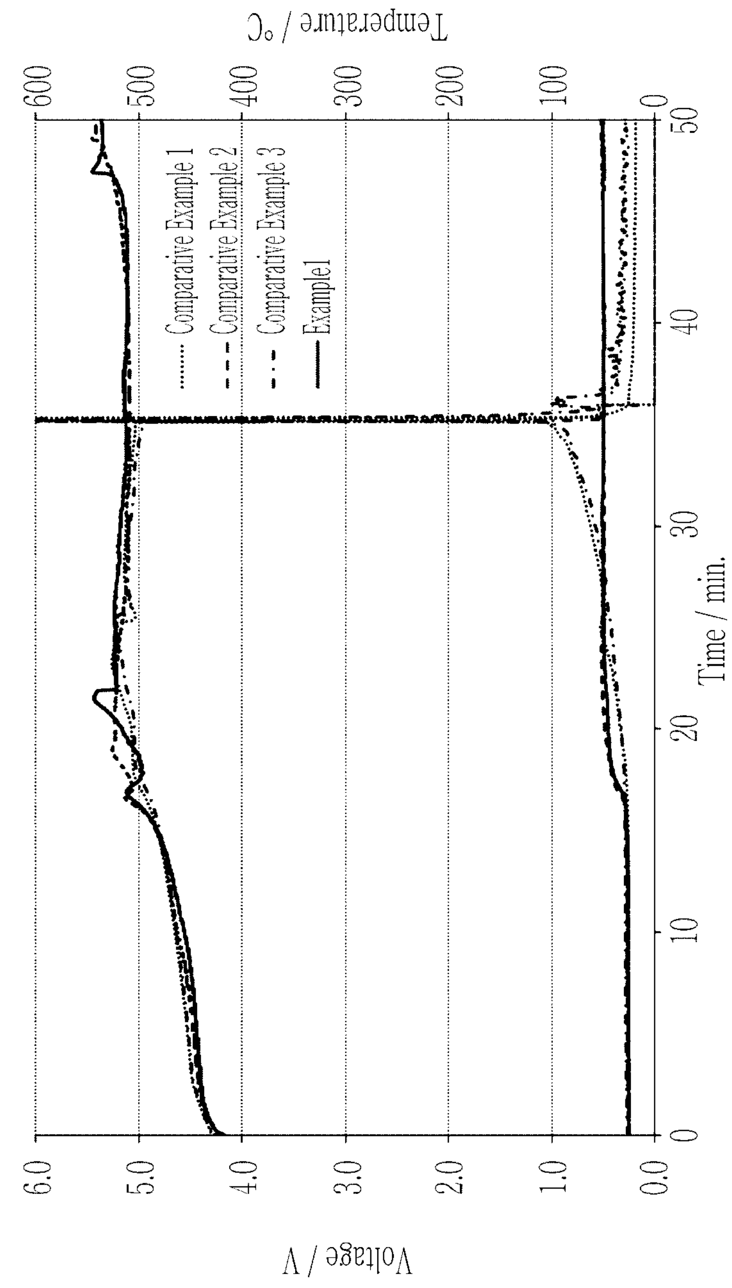
Comparative Example 1
Comparative Example 2
Comparative Example 3
Example1
Voltage / V
Temperature / °C
Time / min.
0.0
1.0
2.0
3.0
4.0
5.0
6.0
0
100
200
300
400
500
600
0
10
20
30
40
50

FIG. 6

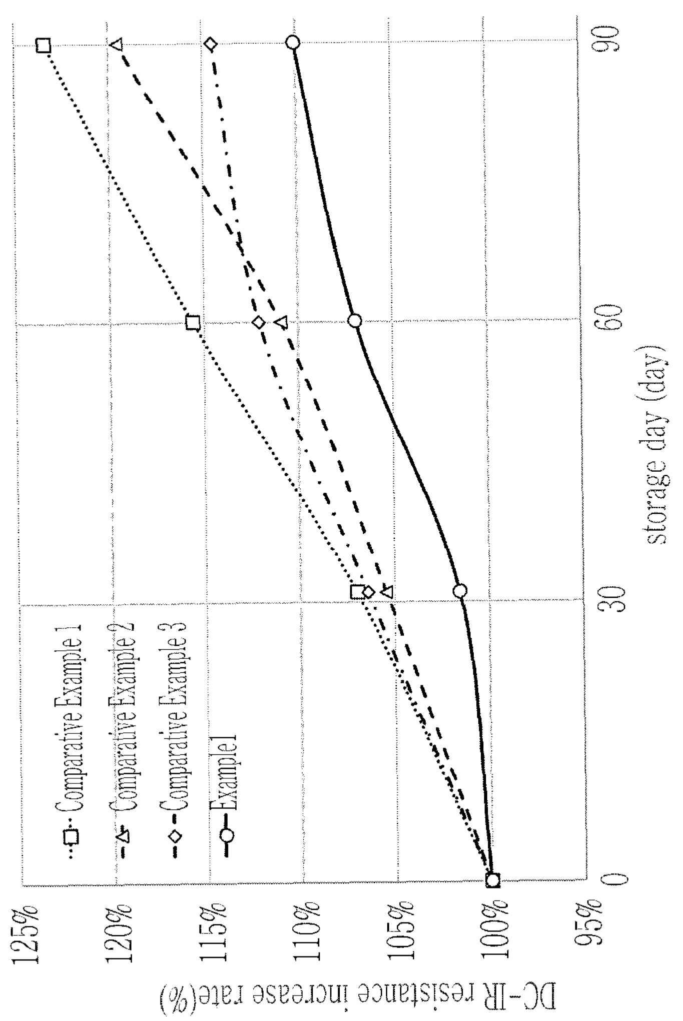
Comparative Example 1
Comparative Example 2
Comparative Example 3
Example1
DC-IR resistance increase rate(%)
125%
120%
115%
110%
105%
100%
95%
0
30
60
90
storage day (day)

Europäisches Patentamt
European Patent Office
Office européen des brevets

# EUROPEAN SEARCH REPORT

Application Number
EP 24 21 2947

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 528 309 A (JIUJIANG TINCI MATERIALS TECH LTD) 27 December 2022 (2022-12-27) | 1,4,6,8 | INV. H01M10/0525 H01M10/0567 |
| A | * claims 1,2,7,9,10 * | 2,3,5,7 | |
| | ----- | | |

| TECHNICAL FIELDS SEARCHED (IPC) |
|---|
| H01M |

The present search report has been drawn up for all claims

2

| Place of search | Date of completion of the search | Examiner |
|---|---|---|
| The Hague | 24 March 2025 | Domínguez Gutiérrez |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 21 2947

This annex lists the patent family members relating to the patent documents cited in the above-mentioned European search report. The members are as contained in the European Patent Office EDP file on
The European Patent Office is in no way liable for these particulars which are merely given for the purpose of information.

24-03-2025

| Patent document cited in search report | Publication date | Patent family member(s) | Publication date |
|---|---|---|---|
| CN 115528309 A | 27-12-2022 | NONE | |

EPO FORM P0459

For more details about this annex : see Official Journal of the European Patent Office, No. 12/82